# EUROPEAN PATENT APPLICATION

(11) **EP 4 756 581 A1**
(43) Date of publication of application: **10.06.2026**
(21) Application number: 25209234.1
(22) Date of filing: 16.10.2025
(51) Int. Cl.: G06F 3/01, G06F 3/04847

(54) **ELECTRONIC APPARATUS AND CONTROL METHOD**

(30) Priority: 09.12.2024 JP 2024214227
(71) Applicant: Lenovo Japan LLC, Tokyo 101-0021 (JP)
(72) Inventor: YANG, XinMei, Nishi-ku, 3-6-1-21F (JP); MATSUBARA, Masaki, Nishi-ku, 3-6-1-21F (JP)
(74) Representative: Openshaw & Co.

(57) **Abstract**

An operational feeling by haptic feedback is improved. A detector detects, as an operation value, a value that changes according to an operation performed on a surface thereof, an actuator vibrates the surface based on a drive signal, and a controller outputs the drive signal to the actuator when the operation value becomes equal to or more than a predetermined detection threshold, and outputs the drive signal having a steeper amplitude change or a shorter duration as a time interval between a first time at which the operation value becomes equal to or more than a first detection value and a second time at which the operation value becomes a second detection value is shorter. The second detection value is smaller than the detection threshold, and the first detection value is smaller than the second detection value.

## Description

### BACKGROUND OF THE INVENTION

### Field of the Invention

The present application relates to an electronic apparatus and a control method, for example, an input device that vibrates in accordance with an operation.

### Description of the Related Art

There has been conventionally known an electronic apparatus that has a function of vibrating in accordance with an operation and performing haptic feedback on an operator. For example, Japanese Unexamined Patent Application Publication No. 2021-111952 discloses an electronic apparatus that includes a pressure sensor configured to generate a pressure value when detecting a pressing operation, a processor connected to a switching circuit to generate a trigger signal when the pressure value exceeds a predetermined pressure threshold, a touch sensor configured to detect position data of the pressing operation, and a switching circuit configured to vibrate a first motor or a second motor based on the trigger signal and the position data.

The electronic apparatus disclosed in Japanese Unexamined Patent Application Publication No. 2021-111952 vibrates the first motor or the second motor when the pressure value obtained by detecting the pressing operation exceeds the predetermined pressure threshold, and stops the vibration when the pressure value falls below the pressure threshold. In other words, the electronic apparatus vibrates by the operator pressing an operation unit of the electronic apparatus, and stops the vibration by releasing the pressing. An operational feeling is provided to a user by presenting the vibration according to the pressing operation.

However, a satisfactory operational feeling may not be necessarily obtained only by controlling whether or not to vibrate an actuator in accordance with the pressing.

### SUMMARY OF THE INVENTION

The present application has been made to solve the above problems, and an electronic apparatus according to the first aspect of the present application includes: a detector configured to detect, as an operation value, a value that changes according to an operation performed on a surface thereof; an actuator configured to vibrate the surface based on a drive signal; and a controller configured to output the drive signal to the actuator when the operation value becomes equal to or more than a predetermined detection threshold. The controller is configured to output the drive signal having a steeper amplitude change or a shorter duration as a time interval between a first time at which the operation value becomes equal to or more than a first detection value and a second time at which the operation value becomes a second detection value is shorter. The second detection value is smaller than the detection threshold, and the first detection value is smaller than the second detection value.

In the electronic apparatus described above, the controller may be configured to output the drive signal having a main component with a higher frequency when the time interval becomes less than a predetermined reference value than when the time interval becomes equal to or more than the reference value.

In the electronic apparatus described above, the controller may be configured to output the drive signal with the shorter duration when the time interval becomes less than a predetermined reference value than when the time interval becomes equal to or more than the reference value.

In the electronic apparatus described above, the detector may include a touch pad, and the actuator may include a coil.

In the electronic apparatus described above, the touch pad may include a plurality of pressure sensors that are arrayed on a board, and the controller may determine the operation value based on a pressure detected for each of the pressure sensors.

In the electronic apparatus described above, the touch pad may include a plurality of touch sensors that are arrayed on a board, and the controller may determine the operation value based on a contact area determined from a touch sensor that detects a contact state among the touch sensors.

A control method for an electronic apparatus according to the second aspect of the present application, the electronic apparatus including: a detector configured to detect, as an operation value, a value that changes according to an operation performed on a surface thereof; an actuator configured to vibrate the surface based on a drive signal; and a controller configured to output the drive signal to the actuator when the operation value becomes equal to or more than a predetermined detection threshold, includes outputting, by the electronic apparatus, the drive signal having a steeper amplitude change or a shorter duration as a time interval between a first time at which the operation value becomes equal to or more than a first detection value and a second time at which the operation value becomes a second detection value is shorter. The second detection value is smaller than the detection threshold, and the first detection value is smaller than the second detection value.

The above-described aspects of present invention can improve an operational feeling by haptic feedback.

### BRIEF DESCRIPTION OF THE DRAWINGS

FIG. 1 is an external view illustrating an external configuration example of an electronic apparatus according to an embodiment;
FIG. 2 is a cross-sectional view illustrating an internal configuration example of the electronic apparatus according to the present embodiment;
FIG. 3 is a schematic block diagram illustrating a functional configuration example of the electronic apparatus according to the present embodiment;
FIG. 4 is a flowchart exemplifying vibration control according to the present embodiment;
FIG. 5 is an explanatory diagram illustrating a first detection example of a time change and a detection interval of a pressing force;
FIG. 6 is a diagram illustrating a first example of a drive signal;
FIG. 7 is an explanatory diagram illustrating a second detection example of a time change and a detection interval of the pressing force;
FIG. 8 is a diagram illustrating a second example of the drive signal; and
FIG. 9 is a diagram illustrating a third example of the drive signal.

### DETAILED DESCRIPTION OF THE INVENTION

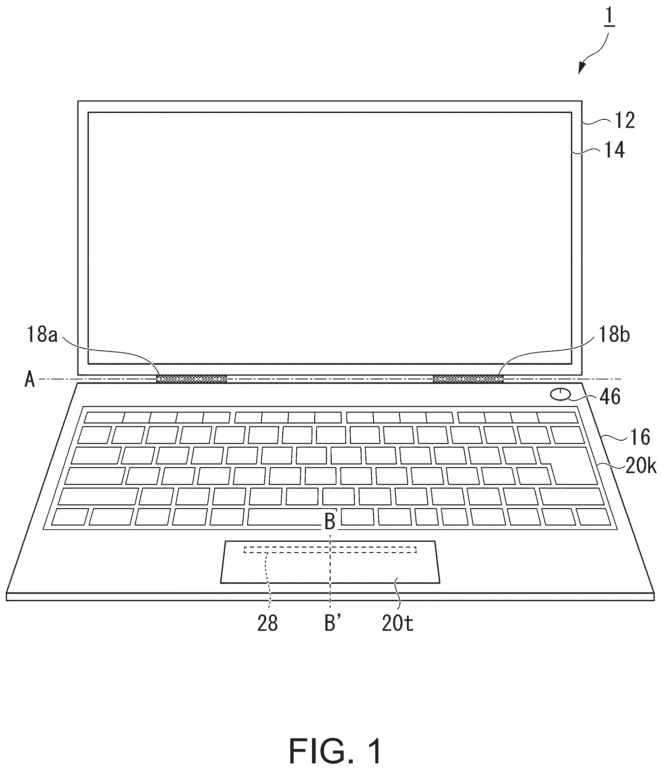

Hereinafter, an embodiment of the present application will be described with reference to the accompanying drawings. First, the overview of an electronic apparatus 1 according to the present embodiment will be described. In the following descriptions, a case where the electronic apparatus 1 is a laptop PC is mainly described. FIG. 1 is an external view illustrating an external configuration example of the electronic apparatus 1 according to the present embodiment.

The electronic apparatus 1 has a haptic feedback function. Typically, the electronic apparatus having the haptic feedback function vibrates when an operation that contacts with a surface is detected, and does not vibrate when the operation is not detected. The electronic apparatus 1 according to the present embodiment vibrates so as to have a steeper amplitude change as an increase in an operation value detected by an operation is steeper as explained below. With this configuration, a user can obtain a sharper operational feeling as the user performs a quicker operation.

The electronic apparatus 1 includes two chassis 12 and 16. Each of the chassis 12 and 16 has a substantially rectangular parallelepiped shape. The surface of each of the chassis 12 and 16 has a substantially rectangular shape. One side of the chassis 12 and one side of the chassis 16 are arranged in parallel, and are mutually engaged by using hinges 18a and 18b. One of the chassis 12 and 16 is rotatably connected to the other around a rotation axis A. The direction of the rotation axis A is parallel to one side of the chassis 12 and one side of the chassis 16. In other words, the chassis 12 and 16 are opened and closed by changing an angle (hereinafter, may be called "opening angle") formed by the surfaces of the chassis 12 and 16. Moreover, in a state where an external force is not added to the chassis 12 and 16, the opening angle is constantly maintained. The opening angle (e.g., angle larger than 45 to 60 degrees) that is sufficiently large corresponds to a state where the chassis 12 and 16 are opened. The electronic apparatus 1 is usually used in this state.

A display 14 is arranged on a surface of the chassis 12 and covers most of the surface. A keyboard 20k, a touch pad 20t, and a power switch 46 are arranged on a surface of the chassis 16. A drive coil 28 is installed on a back surface of the touch pad 20t to face a permanent magnet (described later). The touch pad 20t accepts an operation of bringing a contact object into contact with a surface thereof, and detects an operation value indicating a contact state with the contact object. The contact object is a finger of the user, for example. The contact object is not necessarily limited to one part of a body, and may be an object such as a stylus pen that is convenient to be gripped by the user and to contact the surface of the touch pad 20t. As the contact state, at least the presence or absence of contact is detected. When the contact is detected, the intensity of the contact may be detected. Typically, the intensity of significant contact tends to become higher as the operation value is larger. The drive coil 28 generates an alternating induced magnetic field by the supply of a drive signal, and vibrates the touch pad 20t by the interaction with a magnetic field of the permanent magnet.

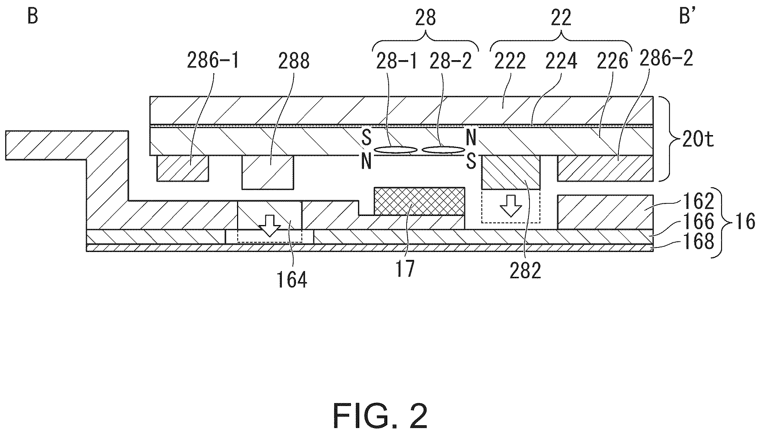

Next, an internal configuration example of the electronic apparatus 1 according to the present embodiment will be described. FIG. 2 is a cross-sectional view illustrating an internal configuration example of the electronic apparatus 1 according to the present embodiment. FIG. 2 illustrates a cross section taken along the line B-B' in FIG. 1. The line B-B' is a line segment that traverses the center of the touch pad 20t in a direction intersecting with the rotation axis A.

The touch pad 20t is installed to overlap a portion of the surface of the chassis 16. The touch pad 20t detects a contact state with another object on its surface. The drive coil 28 is arranged on the back surface of the touch pad 20t. In the example of FIG. 2, the number of drive coils 28 is two. The individual drive coils 28 are distinguished by drive coils 28-1 and 28-2 using sub-numbers. A permanent magnet 17 is arranged in a region covered by the touch pad 20t on the surface of the chassis 16. Under this positional relationship, the permanent magnet 17 faces the drive coils 28-1 and 28-2. For that reason, by supplying the AC drive signal to the drive coils 28-1 and 28-2, the drive coils 28-1 and 28-2 vibrate in a surface normal direction of winding surfaces of the drive coils 28-1 and 28-2. The touch pad 20t vibrates by this vibration, and a stimulus by mechanical vibration can be provided to an operation object contacting with the surface of the touch pad 20t. In other words, the drive coils 28-1 and 28-2 and the permanent magnet 17 constitute an actuator that vibrates the surface of the touch pad 20t based on the drive signal.

The touch pad 20t includes a glass layer 222, an adhesive layer 224, and a printed circuit board assembly (PCBA) 226, which are stacked in this order. Various operation objects come into contact with a surface of the glass layer 222 to protect various members arranged on the PCBA 226.

The PCBA 226 includes a printed circuit board (PCB), and various members such as a controller and a touch sensor are arranged on the PCB. A plurality of touch sensors is arrayed at different positions on a surface of the PCB. In addition to the drive coils 28-1 and 28-2, a component 282, stoppers 286, and a spacer 288 are further arranged on a back surface of the PCB.

The component 282 corresponds to other electronic components including a touch controller 34. The stopper 286 is a member for preventing the contact between a protective sheet 166 of the chassis 16 and a back surface of the component 282 arranged on the back surface of the touch pad 20t. The stopper 286 has a thinner thickness than an interval between the back surface of the touch pad 20t and a mounting surface of the chassis 16 in a stationary state, and is made of a material having a higher rigidity than the spacer 288.

The spacer 288 has contact with a spring 164 sharing the same surface as a surface of a board 162 of the chassis 16 on its back surface, and is made of a more flexible material than those of the stopper 286 and the PCB. The thickness of the spacer 288 corresponds to an interval between the back surface of the touch pad 20t and the mounting surface of the chassis 16 in the stationary state. The spacer 288 absorbs a vibration of the touch pad 20t to stabilize the support by the chassis 16.

The mounting surface covered by the touch pad 20t of the surface of the chassis 16 includes the board 162, the protective sheet 166, and a bottom sheet 168, which are stacked in this order. In a state where the touch pad 20t is mounted on the board 162, on the board 162, the spring 164 is arranged in a region facing the spacer 288, the permanent magnet 17 is arranged in a region facing the drive coils 28-1 and 28-2, and an opening is provided in a region facing the component 282. Moreover, the stoppers 286 face the surface of the board 162. In a state where the touch pad 20t is depressed, the component 282 is recessed into the opening of the board 162. As a result, the contact between the component 282 and the chassis 16 is avoided. The permanent magnet 17 can employ a ferrite sheet, for example.

The bottom sheet 168 has a constant thickness, and covers a portion corresponding to a bottom surface of the electronic apparatus 1. The bottom sheet 168 contacts with a support surface (e.g., a surface of a desk, a table, a working table, etc.) that supports the chassis 16 in a state where the chassis 16 and the chassis 12 are opened. The protective sheet 166 protects the board 162 from an external force, a damage, etc. that are added to the bottom sheet 168.

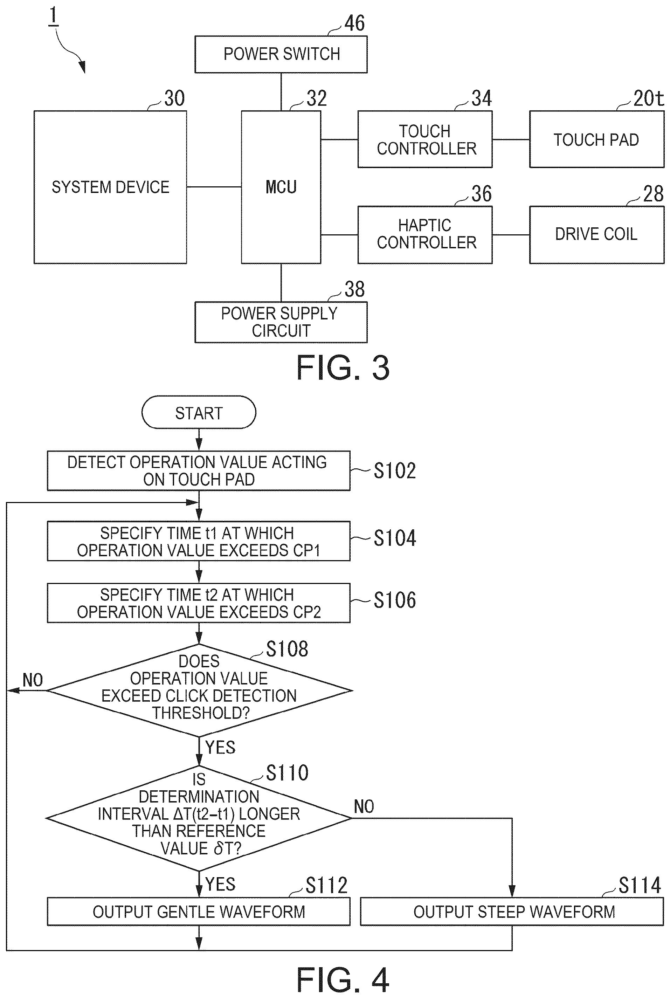

Next, a functional configuration example of the electronic apparatus 1 according to the present embodiment will be described. FIG. 3 is a schematic block diagram illustrating a functional configuration example of the electronic apparatus 1 according to the present embodiment. The electronic apparatus 1 is configured to include the touch pad 20t, the drive coil 28, a system device 30, a micro controller unit (MCU) 32, the touch controller 34, a haptic controller 36, a power supply circuit 38, and the power switch 46.

The system device 30 includes a host device and a controller hub. The host device is a device that constitutes a computer system, namely, a host system, which acts as a core of the electronic apparatus 1. The host device includes a processor, such as a central processing unit (CPU), and a system memory, for example. The processor is a processor that executes various arithmetic processes instructed by instructions described in software (program). The processor executes, for example, processes instructed by various software such as an operating system (OS), a BIOS, and an application program. Note that executing processes instructed by instructions (commands) described in software may be called "execution of software", "to execute software", or the like. A main memory is a writable memory that is used as a reading region of execution programs of the processor or a working region for writing processing data of the execution programs. The execution programs include the OS, various drivers for operating hardware such as peripheral devices, various services/utilities, application programs, and the like.

The host device may execute a predetermined program to use operation information including one or both of a contact position and a pressing force detected on the touch pad 20t.

The controller hub includes one or more controllers, and is connected to a plurality of devices to be able to input and output various types of data. The plurality of devices as connection destinations include various peripheral devices as well as the host device and the MCU 32. The controller hub may be also referred to as a chipset, a platform controller hub (PCH), or the like.

The MCU 32 is a controller that monitors and controls a status of various devices (peripheral device, a sensor, etc.) connected to itself, regardless of an operating state of the host system. A device whose data transmission rate according to the input and output is lower than that of the controller hub is connected to the MCU 32. The MCU 32 is connected to, for example, the power supply circuit 38 and the power switch 46, and controls the supply of power to each device of the electronic apparatus 1.

In cooperation with the touch controller 34 and the haptic controller 36, the MCU 32 controls the touch pad 20t and the actuator, respectively.

Herein, the MCU 32 waits for the input of operation information from the touch controller 34, and specifies an operation value related to an operation on the touch pad 20t instructed by the operation information input from the touch controller 34. Based on whether the detected operation value exceeds a predetermined click detection threshold, the MCU 32 controls whether to vibrate the actuator. When the operation value exceeds the click detection threshold, the MCU 32 outputs a drive instruction to the haptic controller 36. As described later, before detecting the click detection threshold from a state where the contact with the touch pad 20t is not detected, the MCU 32 detects a change rate of the operation value.

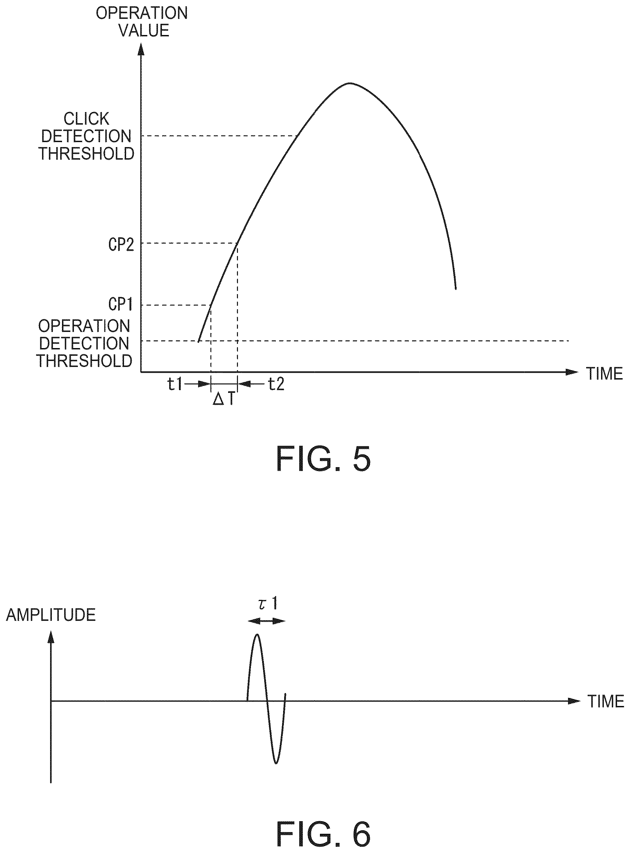

Herein, a method of detecting the change rate of the operation value is explained using an example of a case where the user performs a pressing operation on the touch pad 20t to detect a pressing force as an operation value. As illustrated in FIG. 5, the operation value is increased in accordance with the passage of time and arrives at a local maximum value. The operation value is decreased by releasing the pressing operation, and gradually approaches zero. Herein, the MCU 32 detects a time at which the operation value exceeds a predetermined first detection value CP1 (Check Point 1) as a first time t1, and detects a time at which the operation value exceeds a predetermined second detection value CP2 (Check Point 2) as a second time t2. The first detection value CP1 is a reference value for the operation value, which is larger than an operation detection threshold that is a threshold for determining whether the operation value is detected and is smaller than the second detection value CP2. The operation detection threshold is a lower limit of the operation value for determining whether the contact with the touch pad 20t is performed. The operation detection threshold may be a value meaningfully higher than a noise level of a detection value that is detected when an operation is not performed. The second detection value CP2 may be a value that is larger than the first detection value CP1 and smaller than the click detection threshold. Then, the MCU 32 defines a time interval ΔT from the first time t1 to the second time t2, and controls the characteristics of a drive signal to be supplied to the drive coil 28 constituting the actuator based on the defined time interval ΔT.

For example, the MCU 32 selects a drive signal having a main component whose amplitude change is steeper as the time interval ΔT is shorter. The MCU 32 causes the haptic controller 36 to output the drive signal having a steeper amplitude change as the time interval ΔT is shorter. In that case, the MCU 32 outputs, to the haptic controller 36, a drive instruction including vibration control information that indicates the output of the drive signal having a steeper amplitude change as the time interval ΔT is shorter.

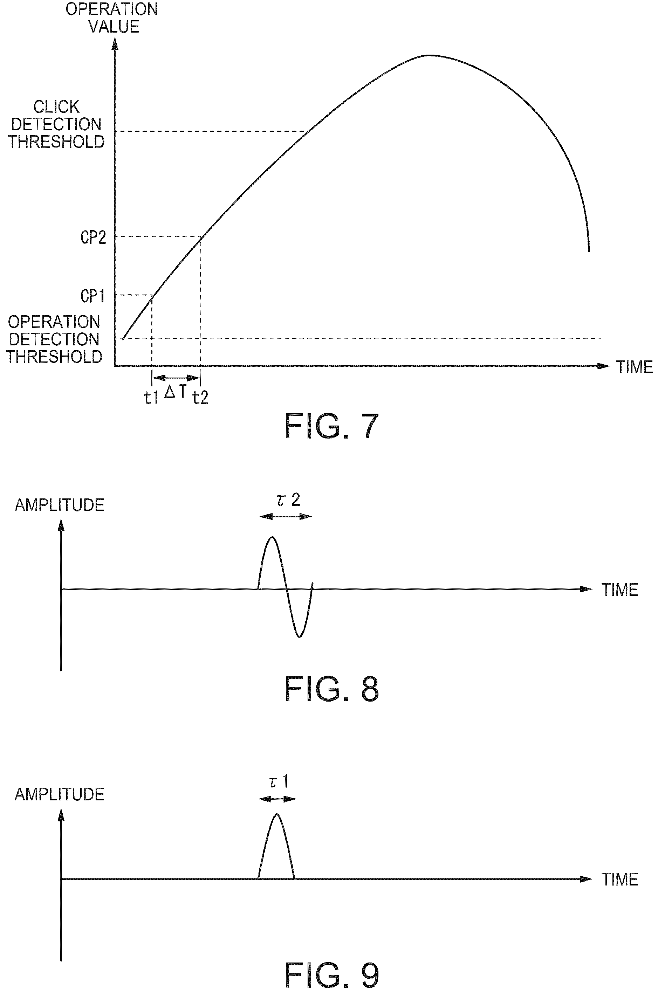

Herein, there is given an example in which a drive signal having one of two preset stages of the characteristics can be selected. The MCU 32 determines whether the time interval ΔT is longer than a predetermined reference value δT. When the time interval ΔT is equal to or less than the reference value δT as illustrated in FIG. 5, the MCU 32 specifies one period of sine wave whose duration time is τ1 (FIG. 6). When the time interval ΔT is longer than the reference value δT as illustrated in FIG. 7, the MCU 32 specifies one period of sine wave whose duration time is τ2 (FIG. 8). The duration time τ2 is twice the duration time τ1.

Returning to FIG. 3, the touch controller 34 detects a contact state according to an operation performed on the surface of the touch pad 20t, and outputs operation information indicating the detected contact state to the MCU 32.

By using the plurality of touch sensors arranged at different positions within a predetermined detection region occupying most of the surface of the touch pad 20t, the touch controller 34 detects respective contact states with the contact object. The touch sensor can employ a pressure sensor, for example. If the pressure sensor can detect a pressure to be added to itself, the pressure sensor may be one that employs any detection principle. For example, a capacitive pressure sensor detects a pressure based on electrostatic capacity between two electrodes facing each other with an insulator between them. A piezoelectric pressure sensor includes a piezoelectric element, and detects a pressure based on a voltage generated by a piezoelectric effect. For example, the touch controller 34 can integrate pressures detected for the respective pressure sensors within the detection region to calculate a pressing force as an operation value indicating the intensity of the contact state. The touch controller 34 outputs operation information indicating the detected operation value to the MCU 32.

Based on whether a pressure detected for each of the pressure sensors arranged on the touch pad 20t exceeds a predetermined detection threshold, the touch controller 34 can determine whether the direct contact is performed on the corresponding pressure sensor or whether the indirect contact via a shield (e.g., the glass layer 222, the adhesive layer 224) is performed on the corresponding pressure sensor. The detection threshold is controlled by the MCU 32. As a result, the sensitivity of the contact with the pressure sensor is adjusted. The touch controller 34 may determine the positions of the pressure sensors that have detected the presence of contact as a series of spatially consecutive contact regions, and define the centroids of the contact regions as contact positions and include the contact positions in the operation information.

Note that the touch controller 34 may determine whether a contact region whose size is equal to or more than a lower limit of a predetermined size is detected as a valid contact region. The size same as or slightly smaller than the size of the contact region that occurs when the contact object contacts with the touch pad 20t is set as the lower limit of the size. An index value of the size may employ an area of the contact region, namely, the number of the pressure sensors related to the determination of the presence of contact in the contact region, or employ a horizontal or vertical diameter of the contact region. The touch controller 34 may output the operation information to the MCU 32 when the valid contact region is detected, and may not output the operation information to the MCU 32 when the valid contact region is not detected. Moreover, the touch controller 34 may integrate pressures detected by pressure sensors arranged within the valid contact region to calculate the pressing force, and ignore pressures detected by pressure sensors arranged in a region other than the valid contact region.

The haptic controller 36 controls a vibration of the actuator in accordance with the control of the MCU 32. The haptic controller 36 waits for the input of a drive instruction from the MCU 32, and executes tactile presentation in accordance with the input of the drive instruction. When executing the tactile presentation, the haptic controller 36 supplies a drive signal to the drive coils 28-1 and 28-2 to vibrate the touch pad 20t. The haptic controller 36 extracts vibration control information included in the drive instruction, and outputs the drive signal having characteristics indicated by the vibration control information to the drive coils 28-1 and 28-2.

Direct current (DC) power is supplied from an alternating current (AC) adapter (not illustrated) or a battery (not illustrated) to the power supply circuit 38. The power supply circuit 38 converts a voltage of the supplied DC power into a voltage required for an operation of each device of the electronic apparatus 1, and supplies electric power having the converted voltage to the destination device. The power supply circuit 38 executes the supply of power in accordance with the control of the MCU 32. The power supply circuit 38 includes a DC/DC converter that converts a voltage of electric power supplied to the own circuit and a battery charger that charges the electric power having the converted voltage to the battery.

When the electric power is supplied from the AC adapter, the battery charger supplies the remaining electric power unused in each device to the battery. When electric power is not supplied from the AC adapter or when electric power supplied from the AC adapter is insufficient, the battery charger supplies electric power discharged from the battery to each device via the DC/DC converter. Based on an instruction from the MCU 32, the power supply circuit 38 specifies a device to be operated and supplies electric power required for an operation to the specified device.

Every time a depressing operation is accepted, the power switch 46 controls the state of power supply to the host system of the electronic apparatus 1 to be one of Power ON and Power OFF. Every time a depressing operation is accepted, the power switch 46 switches between states of Power ON and Power OFF. The power switch 46 outputs the switched state of power supply to the MCU 32. When the MCU 32 is notified of Power ON, the MCU 32 causes the power supply circuit 38 to start supplying power to the host system and the controller hub. When the MCU 32 is notified of Power OFF, the MCU 32 causes the host system to start executing end processing, and causes the power supply circuit 38 to stop supplying power to the host system and the controller hub after being notified of the completion of the end processing from the host system.

Next, an example of vibration control according to the present embodiment will be explained. FIG. 4 is a flowchart exemplifying vibration control according to the present embodiment. In this regard, however, a case where the MCU 32 selects one of two-stage drive signals illustrated in FIGS. 6 and 8 in accordance with the time interval ΔT between the first time t1 and the second time t2 will be explained as an example.

(Step S102) The touch controller 34 detects an operation value indicating a contact state related to an operation on the surface of the touch pad 20t, and notifies the MCU 32 of the detected operation value.

(Step S104) The MCU 32 specifies the first time t1 at which the notified operation value exceeds a first reference value.

(Step S106) The MCU 32 specifies the second time t2 at which the notified operation value exceeds a second reference value.

(Step S108) The MCU 32 determines whether the notified operation value exceeds a click detection threshold. When it is determined that it exceeds the threshold (Step S108: YES), the process proceeds to Step S110. When it is determined that it does not exceed the threshold (Step S108: NO), the process returns to Step S104.

(Step S110) The MCU 32 determines whether the time interval ΔT is longer than the reference value δT of a predetermined time interval. When it is determined that it is long (Step S110: YES), the process proceeds to Step S112. When it is determined that it is not long (Step S110: NO), the process proceeds to Step S114.

(Step S112) The MCU 32 outputs, to the haptic controller 36, a drive instruction indicating a drive signal having a gentle waveform whose duration time is τ2 when the notified operation value is equal to or more than the click detection threshold. The haptic controller 36 outputs the gentle drive signal to the drive coil 28 in accordance with the input of the drive instruction.

(Step S114) The MCU 32 outputs, to the haptic controller 36, a drive instruction indicating a drive signal having a steep waveform whose duration time is τ1 when the notified operation value is equal to or more than the click detection threshold. The haptic controller 36 outputs the short drive signal to the drive coil 28 in accordance with the input of the drive instruction.

Note that, in the example of FIGS. 4 to 8, the case where the MCU 32 causes the haptic controller 36 to output the drive signal having a steeper amplitude change as the time interval ΔT is shorter has been explained as an example, but the embodiment is not limited to this. The MCU 32 may cause the haptic controller 36 to output the drive signal having a shorter duration time as the time interval ΔT is shorter. In that case, the MCU 32 outputs, to the haptic controller 36, the drive instruction including the vibration control information indicating the output of the drive signal having a shorter duration time as the time interval ΔT is shorter.

For example, when the MCU 32 determines that the time interval ΔT is longer than the reference value δT (Step S110: YES) in Step S110 (FIG. 4), the MCU 32 outputs, to the haptic controller 36, a drive instruction indicating a drive signal (FIG. 9) whose duration time is τ1 but has a waveform having a steeper amplitude change than that of the drive signal illustrated in FIG. 6, in Step S112, when the operation value is equal to or more than the click detection threshold. The drive signal illustrated in FIG. 9 has the same frequency as that of the drive signal illustrated in FIG. 8, and has a half-period sine wave as a main component.

Note that, when the MCU 32 determines that the time interval ΔT is not longer than the reference value δT (Step S110: NO) in Step S110 (FIG. 4), the MCU 32 executes the above processing of Step S114 and causes the haptic controller 36 to output the drive signal illustrated in FIG. 6. As a result, a sharp vibration is provided when the operation value is sharply increased by a quick operation, and a gentle vibration is provided when an increase in the operation value is mild by a gentle operation.

In the above description, the case where the touch controller 34 calculates the pressing force as the operation value has been explained as an example, but the embodiment is not limited to this. The touch controller 34 may determine the operation value based on a contact area that is an area of the contact region, instead of the pressing force. When a flexible object other than a finger is used as the contact object with the touch pad 20t, this is because the contact area tends to be larger as the pressing force is stronger and the contact area tends to be smaller as the pressing force is weaker.

The touch controller 34 may determine the operation value by using the pressing force and the contact area. The touch controller 34 may determine, for example, a weighted average value of the pressing force and the contact area as the operation value. A weighting factor used to multiply each of the pressing force and the contact area in the weighted average is previously set in the touch controller 34.

When the touch controller 34 determines the operation value based on the contact area without referring to the pressing force, it is sufficient that the touch sensor can detect at least the presence or absence of the contact with itself by an operation, and thus the touch sensor may not necessarily be a pressure sensor. For example, instead of the pressure sensor, a plurality of electrodes may be arranged on the surface of the PCB. The individual electrodes are covered by the dielectric adhesive layer 224 and the glass layer 222 to form a capacitive sensor in cooperation with them. In other words, based on a change in a voltage generated at each electrode by a change in electrostatic capacitance caused by the presence or absence of the contact object with the glass layer 222, the touch controller 34 can detect the presence or absence of the contact with the corresponding electrode or a portion covering the electrode. Based on the above method, the touch controller 34 can specify a region including the electrode related to the determination of the presence of contact as the contact region. Moreover, the touch controller 34 may output detection information by the touch sensor to the MCU 32, and the MCU 32 may determine the operation value based on the detection information.

In the example of FIGS. 4 to 9, the case where the MCU 32 selects one of the drive signals having the predetermined two-stage characteristics based on the time interval ΔT has been explained mainly, but the embodiment is not limited to this. The MCU 32 may select a drive signal having a one-stage characteristic from among drive signals having different three-stage characteristics. The characteristics may be three stages or more.

Moreover, the case where the electronic apparatus 1 is a laptop PC has been explained mainly in the above description, but the embodiment is not limited to this. If the electronic apparatus 1 includes a detector that vibrates by a pressing operation, the electronic apparatus 1 may be realized by other forms such as a tablet terminal device and a multi-function portable telephone.

As described above, the electronic apparatus 1 according to the present embodiment includes a detector (e.g., the touch pad 20t) that detects, as an operation value (e.g., the pressing force), a value that changes according to an operation performed on a surface thereof; an actuator (e.g., the permanent magnet 17, the drive coil 28) that vibrates the surface of the detector based on a drive signal; and a controller (e.g., the MCU 32) that outputs the drive signal to the actuator when the operation value becomes equal to or more than a predetermined detection threshold (e.g., the click detection threshold). The controller outputs the drive signal having a steeper amplitude change or a shorter duration as the time interval ΔT between the first time t1 at which the operation value becomes equal to or more than the first detection value CP1 and the second time t2 at which the operation value becomes the second detection value CP2 is shorter. The second detection value CP2 is smaller than the detection threshold, and the first detection value CP1 is smaller than the second detection value CP2.

In the electronic apparatus 1, the controller may output the drive signal having a main component with a higher frequency when the time interval ΔT between the first time t1 and the second time t2 becomes less than a predetermined reference value than when the time interval ΔT becomes equal to or more than the reference value.

The controller may output the drive signal with a shorter duration when the time interval ΔT between the first time t1 and the second time t2 becomes less than the predetermined reference value than when the interval becomes equal to or more than the reference value.

The detector may be the touch pad 20t, and the actuator may include a coil (e.g., the drive coil 28).

The touch pad 20t may include a plurality of pressure sensors that are arrayed on a board, and the controller may determine the operation value based on a pressure detected for each of the pressure sensors.

The touch pad 20t may include a plurality of touch sensors that are arrayed on the board, and the controller determines the operation value based on a contact area determined from a touch sensor that detects a contact state among the touch sensors.

According to this configuration, the first time t1 at which the operation value arrives at the first detection value CP1 and the second time t2 at which the operation value arrives at the second detection value CP2 are detected before the operation value arrives at the predetermined detection threshold, the size of the time change in the operation value can be detected based on the interval between the first time t1 and the second time t2. Then, the actuator is driven to vibrate the detector by using the drive signal having the time change according to the detected operation value. Because the detector is vibrated in accordance with the time change in the operation value, it is possible to improve an operational feeling for the user that operates the detector.

As described above, although the embodiment of the present invention has been described in detail with reference to the accompanying drawings, the specific configurations are not limited to the above-described embodiment and include designs etc. that do not depart from the scope of the present invention. The configurations described in the above embodiment can be arbitrarily combined.

### Description of Symbols

1 ... electronic apparatus, 12, 16 ... chassis, 14 ... display, 17 ... permanent magnet, 18a, 18b ... hinge, 20k ... keyboard, 20t ... touch pad, 28 ... drive coil, 30 ... system device, 32 ... MCU, 34 ... touch controller, 36 ... haptic controller, 38 ... power supply circuit, 46 ... power switch.

## Claims

1. An electronic apparatus comprising:
a detector configured to detect, as an operation value, a value that changes according to an operation performed on a surface thereof;
an actuator configured to vibrate the surface based on a drive signal; and
a controller configured to output the drive signal to the actuator when the operation value becomes equal to or more than a predetermined detection threshold, wherein
the controller is configured to output the drive signal having a steeper amplitude change or a shorter duration as a time interval between a first time at which the operation value becomes equal to or more than a first detection value and a second time at which the operation value becomes a second detection value is shorter, and
the second detection value is smaller than the detection threshold, and the first detection value is smaller than the second detection value.

2. The electronic apparatus according to claim 1,
wherein the controller is configured to output the drive signal having a main component with a higher frequency when the time interval becomes less than a predetermined reference value than when the time interval becomes equal to or more than the reference value.

3. The electronic apparatus according to any preceding claim, wherein the controller is configured to output the drive signal with the shorter duration when the time interval becomes less than a predetermined reference value than when the time interval becomes equal to or more than the reference value.

4. The electronic apparatus according to any preceding claim, wherein
the detector includes a touch pad, and
the actuator includes a coil.

5. The electronic apparatus according to claim 4, wherein
the touch pad includes a plurality of pressure sensors that are arrayed on a board, and
the controller determines the operation value based on a pressure detected for each of the pressure sensors.

6. The electronic apparatus according to claim 4, wherein
the touch pad includes a plurality of touch sensors that are arrayed on a board, and
the controller determines the operation value based on a contact area determined from a touch sensor that detects a contact state among the touch sensors.

7. A control method for an electronic apparatus, the electronic apparatus including:
a detector configured to detect, as an operation value, a value that changes according to an operation performed on a surface thereof;
an actuator configured to vibrate the surface based on a drive signal; and
a controller configured to output the drive signal to the actuator when the operation value becomes equal to or more than a predetermined detection threshold,
the method comprising outputting, by the electronic apparatus, the drive signal having a steeper amplitude change or a shorter duration as a time interval between a first time at which the operation value becomes equal to or more than a first detection value and a second time at which the operation value becomes a second detection value is shorter,
the second detection value being smaller than the detection threshold, and the first detection value being smaller than the second detection value.

8. The control method according to claim 6, further comprising outputting the drive signal having a main component with a higher frequency when the time interval becomes less than a predetermined reference value than when the time interval becomes equal to or more than the reference value.

9. The control method according to claim 7 or 8, further comprising outputting the drive signal with the shorter duration when the time interval becomes less than a predetermined reference value than when the time interval becomes equal to or more than the reference value.

10. The control method according to any of claims 7, 8 or 9, wherein
the detector includes a touch pad, and
the actuator includes a coil.

11. The control method according to claim 10, wherein
the touch pad includes a plurality of pressure sensors that are arrayed on a board, and
the controller determines the operation value based on a pressure detected for each of the pressure sensors.

12. The control method according to claim 10, wherein
the touch pad includes a plurality of touch sensors that are arrayed on a board, and
the controller determines the operation value based on a contact area determined from a touch sensor that detects a contact state among the touch sensors.
